# EUROPÄISCHE PATENTANMELDUNG

(11) **EP 2 020 512 A2**
(43) Veröffentlichungstag der Anmeldung: **04.02.2009**
(21) Anmeldenummer: 08013145.1
(22) Anmeldetag: 22.07.2008
(51) Int. Cl.: F16B 5/12, F16B 21/08

(54) **Befestigungsclip**

(30) Priorität: 03.08.2007 DE 102007036732
(71) Anmelder: Lisi Automotive Rapid, 95650 Puiseux-Pontoise (FR)
(72) Erfinder: Endres, Markus, 69215 Eppelheim (DE); Senftleber, Markus, 68775 Ketsch (DE)
(74) Vertreter: Katscher Habermann Patentanwälte

(57) **Zusammenfassung**

Ein Befestigungsclip (1) für die Befestigung eines Dichtungsprofils an einem Karosserieteil eines Fahrzeugs mit einem eine Ausnehmung an dem Karosserieteil bedeckenden Kopfteil (2), das über einen axialen Schaft (4) mit einem die Ausnehmung rastend hintergreifenden Halteteil (5) verbunden ist, weist eine an dem Kopfteil (2) angeordnete, der Ausnehmung zugewandte, den Schaft (4) umgebende ringförmige Dichtung (8) auf, dessen Querschnittsfläche (9) derart asymmetrisch ausgestaltet ist, dass sich die ringförmige Dichtung (8) bei einem axialen Anpressdruck im Wesentlichen in Richtung des Schafts (4) verformt. Die Querschnittsfläche (9) weist eine innere Begrenzungslinie und eine äußere Begrenzungslinie auf, wobei die äußere Begrenzungslinie entweder gradlinig oder zumindest abschnittsweise gekrümmt auf den Schaft (4) zu verläuft. Die innere Begrenzungslinie verläuft im Wesentlichen in axialer Richtung oder ist konkav gekrümmt.

## Beschreibung

Die Erfindung bezieht sich auf einen Befestigungsclip für die Befestigung eines Dichtungsprofils an einem Karosserieteil eines Fahrzeugs mit einem eine Ausnehmung in dem Karosserieteil bedeckenden Kopfteil, das über einen axialen Schaft mit einem die Ausnehmung rastend hintergreifenden Halteteil verbunden ist, sowie mit einer an dem Kopfteil angeordneten, der Ausnehmung zugewandten, den Schaft umgebenden ringförmigen Dichtung.

Derartige Befestigungsclips sind in unterschiedlicher Formgebung und in unterschiedlichen Größen bekannt und werden für die Verbindung von mindestens zwei Bauteilen in den unterschiedlichsten Anwendungsbereichen verwendet.

Im Bereich des Kraftfahrzeugbaus werden solche Befestigungsclips beispielsweise dazu verwendet, ein Dichtungsprofil längs eines Türrahmens zu befestigen. Da in die Spalten um den Türrahmen Wasser eindringen und auch in die Nähe der Befestigungsclips gelangen kann ist es erforderlich, dass die Befestigungsclips die jeweils zugeordnete Ausnehmung in dem Türrahmen dicht bedecken. Anderenfalls könnte durch die Ausnehmungen Wasser in den Türrahmen eindringen und dort beispielsweise eine unerwünschte Korrosion begünstigen.

Es hat sich gezeigt, dass für derartige Anforderungen insbesondere Befestigungsclips aus zwei verschiedenen Materialien besonders geeignet sind. Ein Grundkörper des Befestigungsclips mit dem Kopfteil, dem axialen Schaft und dem Halteteil ist aus einem formstabilen Kunststoff hergestellt, während die ringförmige Dichtung aus einem elastischen Material besteht, welches bereits beim geringen Anpressdrucks des Befestigungsclips die von der Dichtung umgebene Ausnehmung zuverlässig abdichtet.

Aus der Praxis ist es bekannt, die ringförmige Dichtung an einer im Wesentlichen scheibenförmigen Unterseite des Kopfteils anzuordnen.

Es sind scheibenförmige Dichtungsringe mit einer dem Karosserieteil zugewandten ebenen Dichtringfläche bekannt (beispielsweise DE 20 2006 011 702 U1). Derartige scheibenförmige Dichtringe erfordern jedoch einen vergleichsweise hohen Anpressdruck, um eine zuverlässige Dichtwirkung gewährleisten zu können.

Aus der Praxis ist es ebenfalls bekannt, die Dichtung in Form einer ringförmigen Dichtlippe auszugestalten, deren Breite sich mit zunehmendem Abstand von dem Kopfteil verjüngt. Eine ringförmige Dichtung mit einem komplexen Dichtungsprofil ist beispielsweise aus DE 195 19 623 A1 bekannt. Es hat sich jedoch herausgestellt, dass sich derartige Dichtlippen bei der Montage des Befestigungsclips leicht verformen und in kaum zu kontrollierender Weise sich teilweise nach innen zum Schaft hin umlegen, während sich die Dichtlippe an anderen Bereichen entlang der Umfangslinie nach außen verbiegt, beziehungsweise verformt.

Insbesondere in den Übergangsbereichen zwischen zwei Abschnitten mit einer nach innen verbogenen, beziehungsweise nach außen verbogenen Dichtlippe ist die ansonsten ausreichende Dichtwirkung nicht mehr gewährleistet. Auch wird es als nachteilig empfunden, dass eine gewünschte geringfügige Verformung der Dichtlippe nicht zuverlässig vorgegeben werden kann, so dass die davon beeinflusste Dichtwirkung nicht zuverlässig gewährleistet werden kann.

Aufgabe der vorliegenden Erfindung ist es demzufolge, einen Befestigungsclip mit einer ringförmigen Dichtung so auszugestalten, dass mit einfachen Mitteln eine möglichst zuverlässige Dichtwirkung gewährleistet werden kann.

Diese Aufgabe wird erfindungsgemäß dadurch gelöst, dass eine Querschnittsfläche der ringförmigen Dichtung derart asymmetrisch ausgestaltet ist, so dass sich die Dichtung bei einem axialen Anpressdruck im Wesentlichen in Richtung des Schafts verformt. Die Querschnittsfläche der ringförmigen Dichtung sollte sich üblicherweise entlang der Umfangslinie der ringförmigen Dichtung nicht verändern. Durch die asymmetrische Formgebung der Querschnittsfläche wird gewährleistet, dass sich die ringförmige Dichtung ausschließlich in Richtung des Schafts verformt, beziehungsweise verbiegt.

Eine längs der Umfangslinie der ringförmigen Dichtung wechselnde Verformung mal in Richtung des Schaftes nach innen und in einem benachbarten Abschnitt entlang der Umfangslinie mal nach außen und die dann zwingend existierenden Übergangsbereiche wechselnder Verformung sind durch die asymmetrische Formgebung der Querschnittsfläche ausgeschlossen.

Einer vorteilhaften Ausgestaltung des Erfindungsgedankens zufolge ist vorgesehen, dass die Querschnittsfläche eine innere Begrenzungslinie, die im Wesentlichen in axialer Richtung verläuft, und eine äußere Begrenzungslinie aufweist, die mindestens abschnittsweise auf den Schaft zu verläuft. Der Verlauf der inneren sowie der äußeren Begrenzungslinie ist dabei jeweils ausgehend von dem Kopfteil, an welchem die ringförmige Dichtung angeordnet ist, in Richtung des zu bedeckenden und abzudichtenden Karosserieteils angegeben.

Die im Wesentlichen in axialer Richtung verlaufende innere Begrenzungslinie ermöglicht eine kostengünstige Herstellung der ringförmigen Dichtung. Durch die zumindest abschnittsweise auf den Schaft zu verlaufende äußere Begrenzungslinie kann sichergestellt werden, dass sich die mit zunehmendem Abstand von dem Kopfteil verjüngende Dichtung grundsätzlich in Richtung des Schafts und damit nach innen verformt. Es ist dabei denkbar, dass bei einer geeigneten Formgebung der Querschnittsfläche die ringförmige Dichtung in eine Dichtlippe mündet, die sich jedoch zweckmäßigerweise mit zunehmendem Abstand von dem Kopfteil auf den Schaft zu verlaufend verjüngt.

Eine besonders kostengünstige Herstellung sowie eine zuverlässige Dichtwirkung lassen sich dadurch erreichen, dass die äußere Begrenzungslinie gradlinig in einem Winkel relativ zur inneren Begrenzungslinie verläuft. Die Querschnittsfläche der ringförmigen Dichtung weist dann eine Dreiecksform auf, dessen untere, von dem Kopfteil abgewandte und dem Karosserieteil zugewandte Spitze bereits bei einem geringen Anpressdruck in Richtung des Schafts und damit nach innen verformt werden kann.

Es ist ebenso denkbar und für verschiedene Anforderungen vorteilhaft, dass die äußere Begrenzungslinie gekrümmt verläuft. Die äußere Begrenzungslinie kann dabei in Form eines Kreisbogensegments ausgestaltete sein oder aber eine komplexe, sich zumindest abschnittsweise ändernde Krümmung aufweisen. Es ist ebenfalls möglich, dass die äußere Begrenzungslinie abschnittsweise gekrümmt verläuft und sich gradlinige Abschnitte mit gekrümmten Abschnitten der äußeren Begrenzungslinie abwechseln. Auf diese Weise können nahezu beliebige Querschnittsflächen der ringförmigen Dichtung vorgegeben werden, sofern der asymmetrische Ausgestaltung und eine sich daraus ergebende, in Richtung des Schafts erfolgende Verformung beachtet und gewährleistet wird.

Bei einer geeigneten Formgebung kann auch erreicht werden, dass sich die äußere Kontur der ringförmigen Dichtung in einer vorgegebenen Weise nach innen rollt, bzw. verformt, so dass eine Ringfläche und damit eine ringförmige Anpressfläche der Dichtung entsteht, wodurch die Dichtwirkung verbessert werden kann.

Gemäß einer weiteren Ausgestaltung des Erfindungsgedankens ist vorgesehen, dass die Querschnittsfläche eine innere Begrenzungslinie aufweist, die mindestens abschnittsweise vom Schaft weg verläuft. Die Querschnittsfläche kann ebenso eine innere Begrenzungslinie aufweisen, die konkav gekrümmt ist. Durch die konkave Krümmung der inneren Begrenzungslinie wird erreicht, dass die ringförmige Dichtung auf Ihrer dem Kopfteil abgewandten Seite in einer sich verjüngende Dichtlippe mündet, die in Richtung des Schafts ausgerichtet ist. Es reicht bereits ein geringer Anpressdruck, um eine zusätzliche Verformung der Dichtlippe in Richtung des Schaftes herbeizuführen und die gewünschte Dichtwirkung zu erreichen. Durch die konkave Krümmung wird auch eine Schwächung der Dichtung an der Innenseite bewirkt, so dass bei einem axialen Anpressdruck bevorzugt eine Verformung nach Innen in Richtung des Schafts erfolgt.

Nachfolgend werden einige Ausführungsbeispiele der Erfindung näher erläutert, die in der Zeichnung dargestellt sind. Es zeigt:
Figur 1 eine Seitenansicht eines Befestigungsclips mit einem Kopfteil, welches über einen axialen Schaft mit einem Halteteil verbunden ist,
Figur 2 in vergrößerter Darstellung eine Schnittansicht des in Figur 1 dargestellten Befestigungsclips im Bereich einer ringförmigen Dichtung A,
Figur 3 eine Schnittansicht entsprechend Figur 2 mit einer ringförmigen Dichtung, die eine andere Querschnittsfläche aufweist und
Figur 4 eine Schnittansicht entsprechend den Figuren 2 und 3, wobei die in Figur 4 dargestellte Dichtung eine wiederum abweichende Querschnittsfläche aufweist.

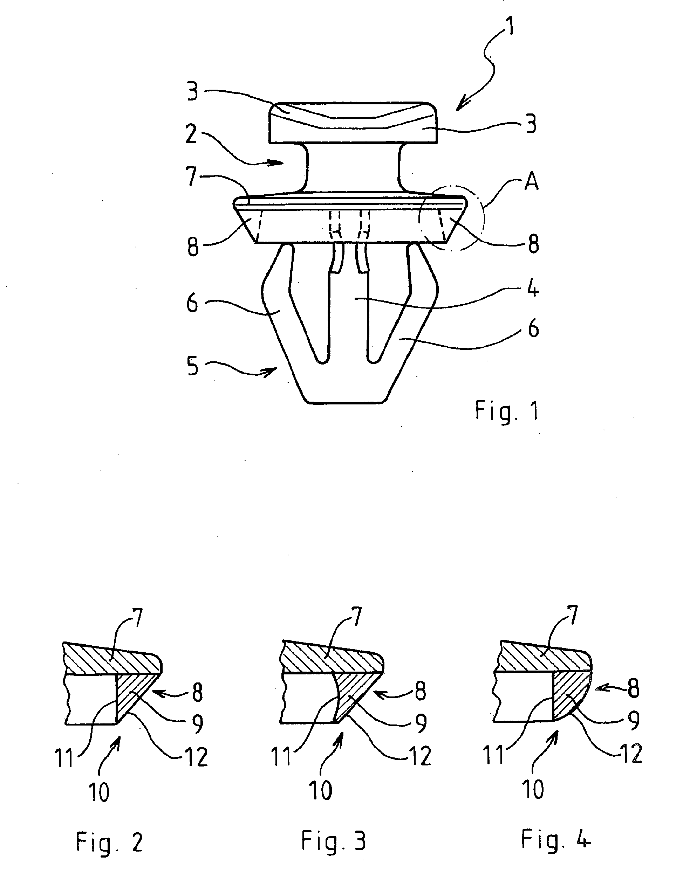

Ein in Figur 1 exemplarisch dargestellter Befestigungsclip 1 weist ein Kopfteil 2 zur Befestigung an, beziehungsweise in einem nicht dargestellten Dichtungsprofil für einen Türrahmen auf. Zu diesem Zweck weist das Kopfteil 2 an seinem einen Ende seitlich vorspringende Ausformungen 3 auf, die eine formschlüssige Festlegung des Kopfteils 2 in einer daran angepassten Ausnehmung des Dichtungsprofils ermöglichen.

Das Kopfteil 2 ist über einen axialen Schaft 4 mit einem Halteteil 5 verbunden. Das Halteteil 5 weist mehrere seitlich abstehende Rastzungen 6 auf, die eine formschlüssige Festlegung des Befestigungsclips 1 in einer daran angepassten Ausnehmung eines ebenfalls nicht dargestellten Karosserieteils ermöglichen.

An einem dem Halteteil 5 zugewandten Ende weist das Kopfteil 2 eine tellerförmige Andruckplatte 7 auf. An dieser Andruckplatte 7 ist eine ringförmige Dichtung 8 angeordnet, welche den axialen Schaft 4 umgibt. Die Abmessungen der tellerförmigen Andruckplatte 7 und der ringförmigen Dichtung 8 sind dabei so auf die Abmessungen der nicht dargestellten Ausnehmung des Karosserieteils angepasst, das die tellerförmige Andruckplatte 7 die Ausnehmung vollständig bedeckt und die ringförmige Dichtung 8 die von ihr umgebene Ausnehmung abdichten kann.

Die ringförmige Dichtung 8 ist zweckmäßigerweise aus einem elastischen Material hergestellt, während das Kopfteil 2, der Schaft 4 und das Halteteil 5 üblicherweise einstückig aus einem anderen, formstabilen Material hergestellt sind.

Aus diesem Grund werden derartige Befestigungsclips 1 auch Zwei-Komponenten-Befestigungsclips (2-K-Clips) genannt.

In den Figuren 2, 3 und 4 werden verschiedene Querschnittsflächen 9 der ringförmigen Dichtung 8 vergrößert dargestellt, die jeweils asymmetrisch ausgestaltet sind und bei dem üblicherweise vorgesehenen Anpressdruck der tellerförmigen Andruckplatte 7 an dem Karosserieteil eine nach innen auf den Schaft 4 zu gerichtete Verformung der ringförmigen Dichtung 7 bewirken. Maßgeblich für eine zuverlässige Dichtwirkung ist im Wesentlichen die Verformung eines der tellerförmigen Andruckplatte 7 abgewandten Endbereichs 10 der ringförmigen Dichtung 8. Unter dieser Voraussetzung ist auch eine geringfügige nach außen gerichtete Verformung der ringförmigen Dichtung 8 in einem der tellerförmigen Andruckplatte 7 zugewandten Bereich der ringförmigen Dichtung 8 zulässig, beziehungsweise tolerabel.

Die in Figur 2 abgebildete Querschnittsfläche 9 weist eine im Wesentlichen in axialer Richtung verlaufende innere Begrenzungslinie 11 und einer gradlinig in einem Winkel relativ zu der inneren Begrenzungslinie 11 verlaufende äußere Begrenzungslinie 12 auf. Die ringförmige Dichtung 8 wird demzufolge auf der Innenseite durch eine zylinderförmige Fläche und auf der Außenseite durch eine kegelstumpfförmige Fläche begrenzt. Der sich in Richtung des Schafts 4 verjüngende Endbereich 10 der ringförmigen Dichtung 8 verbiegt sich deshalb bereits bei einem geringen Anpressdruck in Richtung des Schafts 4 und damit nach innen.

Abweichend zu dem in Figur 2 dargestellten Ausführungsbeispiel weist das in Figur 3 dargestellte Ausführungsbeispiel eine innere Begrenzungslinie 11 auf, die konkav gekrümmt ist. Auf diese Weise wird eine dichtlippenförmige Formgebung des Endbereichs 10 der ringförmigen Dichtung 8 erreicht.

Bei dem in Figur 4 dargestellten Ausführungsbeispiel verläuft die innere Begrenzungslinie 11 im Wesentlichen in axialer Richtung während die äußere Begrenzungslinie 12 eine im Wesentlichen gleich bleibende Krümmung aufweist und damit in ihrem Verlauf einen Kreisbogensegment entspricht. Je nach gewähltem Material für die ringförmige Dichtung 8 und dem im Befestigungszustand vorgesehenen Anpressdruck der tellerförmigen Andruckplatte 7 an dem Karosserieteil kann eine derart gekrümmte äußere Begrenzungslinie 12 zu vorteilhaften Eigenschaften der ringförmigen Dichtung 8 führen.

Die in den Figuren 2 bis 4 abgebildeten Ausführungsbeispiele sind dabei lediglich beispielhaft und stellen keine abschließende Aufzählung der geeigneten Formgebungen für die ringförmige Dichtung 8 dar, die zum Erreichen der gewünschten Dichtwirkung lediglich eine in geeigneter Weise asymmetrisch ausgestaltete Querschnittsfläche erfordert.

## Patentansprüche

1. Befestigungsclip für die Befestigung eines Dichtungsprofils an einem Karosserieteil eines Fahrzeugs mit einem eine Ausnehmung in dem Karosserieteil bedeckenden Kopfteil, das über einen axialen Schaft mit einem die Ausnehmung rastend hintergreifenden Halteteil verbunden ist, sowie mit einer an dem Kopfteil angeordneten, der Ausnehmung zugewandten, den Schaft umgebenden ringförmigen Dichtung, **dadurch gekennzeichnet, dass** eine Querschnittsfläche (9) der ringförmigen Dichtung (8) derart asymmetrisch ausgestaltet ist, so dass sich die ringförmige Dichtung (8) bei einem axialen Anpressdruck im Wesentlichen in Richtung des Schafts (4) verformt.

2. Befestigungsclip nach Anspruch 1, **dadurch gekennzeichnet, dass** die Querschnittsfläche (9) eine innere Begrenzungslinie (11), die im Wesentlichen in axialer Richtung verläuft, und eine äußere Begrenzungslinie (12) aufweist, die mindestens abschnittsweise auf den Schaft (4) zu verläuft.

3. Befestigungsclip nach Anspruch 2, **dadurch gekennzeichnet, dass** die äußere Begrenzungslinie (12) gradlinig in einem Winkel relativ zu der inneren Begrenzungslinie (11) verläuft.

4. Befestigungsclip nach Anspruch 2, **dadurch gekennzeichnet, dass** die äußere Begrenzungslinie (12) zumindest abschnittsweise gekrümmt verläuft.

5. Befestigungsclip nach Anspruch 1, **dadurch gekennzeichnet, dass** die Querschnittsfläche (9) eine innere Begrenzungslinie (11) aufweist, die mindestens abschnittsweise vom Schaft (4) weg verläuft.

6. Befestigungsclip nach Anspruch 1, **dadurch gekennzeichnet, dass** die Querschnittsfläche (9) eine innere Begrenzungslinie (11) aufweist, die konkav gekrümmt ist.
